# EUROPEAN PATENT SPECIFICATION

(11) **EP 0 534 803 B1**
(45) Date of publication and mention of the grant of the patent: **05.02.1997**
(21) Application number: 92308829.8
(22) Date of filing: 28.09.1992
(51) Int. Cl.: G07F 15/00, G07F 7/08, G07F 7/00

(54) **Prepayment system**
Vorausbezahlungssystem
Système de paiement préalable

(30) Priority: 27.09.1991 GB 9120537; 23.10.1991 GB 9122460
(43) Date of publication of application: 31.03.1993
(73) Proprietor: SCHLUMBERGER INDUSTRIES LIMITED, Farnborough Hampshire, GU14 7PW (GB)
(72) Inventor: Golightly, Derek, Felixstowe, Suffolk IP11 7LD (GB); Pattinson, Neville Graham, Ipswich, Suffolk IP10 0TJ (GB); Clarke, David John, Bramford, Suffolk IP8 4HA (GB); Vaughan, John Edward, Felixstowe, Suffolk IP11 7EQ (GB)
(74) Representative: Stoole, Brian David

(56) References cited:
- GB-A- 2 191 622
- GB-A- 2 208 955
- US-A- 4 777 354

## Description

This invention relates to prepayment systems permitting access to electricity, gas or water (each of which is hereinafter referred to simply as "a commodity"), and is more particularly but not exclusively concerned with prepayment systems of the kind disclosed in our United Kingdom Patents Nos 2 153 573 and 2 191 622.

The prepayment systems described in our United Kingdom Patents Nos 2 153 575 and 2 191 622 comprise a prepayment token in the form of key having a memory, a receptacle for the key (the receptacle typically forming part of a meter arranged to meter the commodity), and a circuit (also typically forming part of the meter) for allowing access to the commodity only when authorised by predetermined data read from the key memory. The data in the key memory is typically entered in the memory by inserting the key into a receptacle in a vending machine, normally located at the commodity supplier's premises, the machine then entering the data in return for payment, eg via a coin or bank note accepting unit forming part of the machine. The data typically includes data representative of the monetary amount paid, tariff information and one or more unique identification codes.

In use, the circuit in the meter reads the data in the key memory, and if the data is valid, permits supply of the commodity to continue until the credit represented by the credit data is exhausted, at which point it discontinues the supply, eg by means of a contactor in the case of an electricity supply or by means of a solenoid-operated valve in the case of a gas or water supply.

In the system of the latter of the aforementioned patents, in addition to reading the key memory, the meter circuit can write the meter reading or readings into the key memory along with date and time information. Thus the next time the key is inserted into a vending machine, the meter reading or readings and the date and time to which they relate are read from the key memory by the machine and then transferred to the commodity supplier, in order to facilitate verification of the satisfactory and fraud-free operation of the system.

Occasionally, however, the contacts of the key become dirty and/or the key is moved in the receptacle in the meter while the meter is reading from or writing to the key memory, which can lead to corruption of the data in the key memory. It is an object of the present invention to alleviate this problem.

According to the present invention, there is provided a prepayment commodity supply system comprising a prepayment token having a memory, and supply control means having a receptacle for reciving the token and a circuit coupled to the receptacle and responsive to credit and identification data in the token memory to permit access to the commodity in dependence upon said credit data only if said identification data is recognised as valid by said circuit, said circuit being further arranged to write data representative of information stored in the supply control means into the token memory, wherein the token memory comprises a first part containing said credit and identification data and a second part for receiving said stored information data, and the token includes write inhibit means which co-operates with said circuit to prevent the first part of the token memory from being written to by said circuit.

The supply control means may include a timing unit, the circuit being arranged to co-operate with the timing unit to permit access to the commodity for a time period dependent upon said credit data.

Alternatively or additionally, the supply control means may include a metering unit for metering the commodity, in which case the stored information data preferably includes at least one meter reading produced by the metering unit, and the circuit may be arranged to co-operate with the metering unit to permit access to an amount of the commodity dependent upon said credit data.

Conveniently, the token memory comprises an EEPROM.

Advantageously, the token, which may resemble a key, includes a first input for receiving a token enable signal, a second input for receiving serial data, a third input for receiving a data clock signal for clocking said serial data, and a fourth input for receiving a control signal to control said write inhibit means, and preferably also includes a respective digital debounce circuit associated with each of said inputs.

The invention will now be described, by way of example only, with reference to the accompanying drawings, of which:
Figure 1 is a simplified block diagram of a prepayment electricity metering system in accordance with the present invention;
Figure 2 is a slightly more detailed schematic diagram of the circuitry within a prepayment token for use in the system of Figure 1.

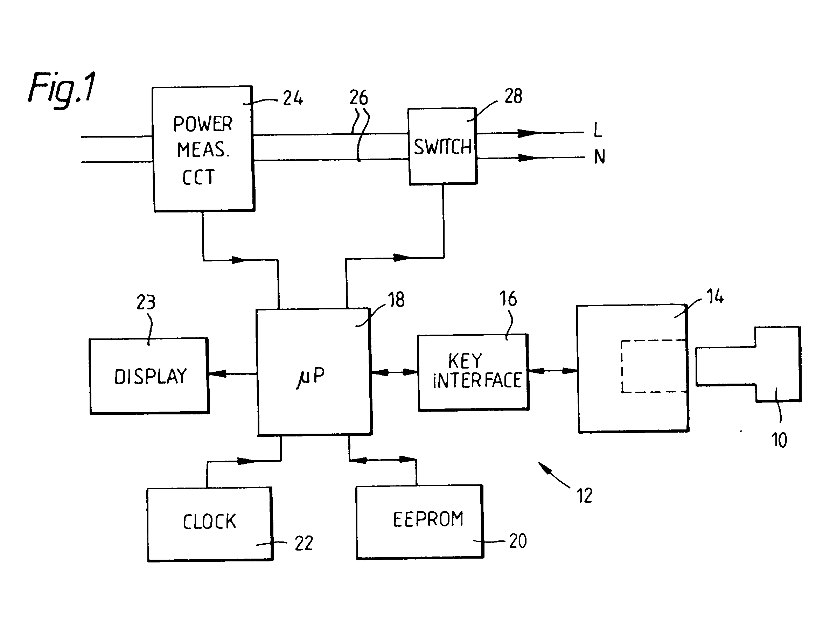

The prepayment electricity metering system shown in Figure 1 is intended for installation in an electricity consumer's premises, and is closely based on the system described in our United Kingdom Patent No. 2 191 622 (which was in turn a development of the system described in our United Kingdom Patent No. 2 153 573).

Thus the system comprises a key 10, known as a customer key, containing a non-volatile memory such as an EEPROM, and a multi-rate electricity meter 12 having a receptacle 14 for receiving the key 10. The physical form of the key 10 and the receptacle 12 can be as described in our United Kingdom Patent No. 2 191 883.

Associated with the receptacle 14, within the meter 12, is a key interface circuit 16 coupled to a microprocessor 18. The microprocessor 18 is coupled in turn to another non-volatile memory 20 in the form of an EEPROM, to a clock 22, to a liquid crystal display 23, to a power measuring circuit 24 connected in the consumer's electrical power distribution circuit 26 and to a switch unit or contactor 28 also connected in the distribution circuit 26.

The system operates substantially as described in our United Kingdom Patents Nos. 2 153 574 and 2 191 622. In particular, the consumer takes the key 10 to a vending machine, typically located in or near the electricity supplier's premises, and inserts the key 10 into a receptacle, similar to the receptacle 14, in the machine. The consumer then inserts coins or bank notes into the machine, which, having read the key memory, responds by writing credit data representative of the amount of credit purchased into the key memory, along with tariff data representative of the current electricity supply tariffs and pass number data indicative of how many times the key has been used. The key memory typically already contains identification data uniquely identifying the key, the meter in which it is to be used and the consumer, all of which identification data was entered when the key 10 was first issued to the consumer. Having charged the key 10 with credit, the consumer returns home and inserts the key into the receptacle 14. This causes the microprocessor 18 to read the contents of the key memory, to perform checks to see if these contents indicate a valid key as described in United Kingdom Patent No. 2 153 173, and if they do, to write them into the memory 20. The microprocessor 18 also writes the current readings of the meter 12, which are stored in the memory 20, along with time and date information, into the key memory, substantially as described in United Kingdom Patent No 2 191 622.

The principal difference between the system of the present invention and the system of our earlier United Kingdom Patents Nos. 2 153 573 and 2 191 622 (aside from the storage of monetary credit and tariff information in the key memory rather than an amount of energy purchased) lies in the circuitry in the key 10, which in the systems of the two earlier patents consisted of little more than the EEPROM itself.

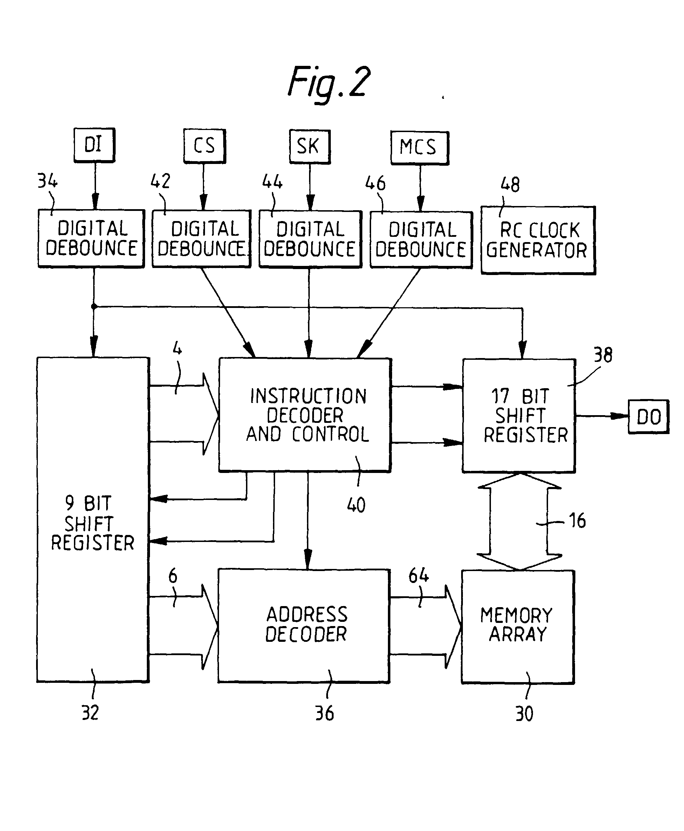

Thus the circuitry in the key 10 is shown in Figure 2, and comprises an integrated circuit containing, in addition to a 64 x 16 bit EEPROM 30, a 9 bit shift register 32 having its serial input coupled via a digital debounce circuit 34 to a data input pin DI and its outputs coupled via an address decoder 36 to one set of parallel inputs of the EEPROM, a 17 bit shift register 38 having its parallel inputs/outputs connected to a set of parallel inputs/outputs of the EEPROM and its serial output connected to a data output pin DO, and an instruction decoder and control circuit 40 which controls the operation of the shift registers 32 and 38 and the address decoder 36 in response to control signals received via respective digital debounce circuits 42, 44, 46 from respective input pins CS, SK and MCS. The digital debounce circuits 34, 42, 44, 46 are of a kind known per se, each one simply comprising a three bit shift register and a couple of gates, controlled by an internal 2MHz clock 48 such that an input at the respective input pin has to remain in a given state for at least three clock cycles for a transition to that state to be recognised and accepted.

In addition to the five pins mentioned in the preceding paragraph, the circuitry in the key 10 also has two power supply pins and a test pin: these have been omitted from Figure 2 for the sake of clarity.

When the key 10 is inserted in a receptacle in a vending machine (or any other ancillary equipment other than a meter), a logic level 0 signal is applied to the MCS input pin, as a result of which the vending machine or other ancillary equipment is able to read from and write to every memory location in the EEPROM 30 in the key by applying an appropriate data clock signal to the pin SK and an appropriate control signal to the pin CS.

However, when the key 10 is inserted into the receptacle 14 of its meter 12, a logic level 1 signal is applied to the pin MCS, and this is operative, via the instruction decoder and control circuit 40 and the address decoder 36, to prevent or inhibit the writing of data to all memory locations within the EEPROM 30 except for a small group of locations dedicated to storing the readings of the meter and the related time and date information. This feature, together with the provision of the digital debounce circuits 34, 42, 44, 46, significantly reduces the possibility of the credit, tariff and identification data in the EEPROM 30 becoming corrupted by movement of the key 10 in the receptacle 14 or by virtue of dirt on the pins.

Many modifications can be made to the described embodiment of the invention. For example, the key 10 need not have the physical form of a key, but can instead be constituted by a so-called "smart card". Additionally, although the invention has been described in relation to an electricity metering system, it is equally applicable to other commodity metering systems, for example gas or water metering systems.

Finally, and particularly where the commodity is water, the commodity supply can be pre-paid for on a timed basis, rather than on a metered basis (ie a given amount of credit permits supply for say a week or a month). In this case, the metering function can still be retained, with the clock 22 and the microprocessor 18 serving additionally to provide the necessary timing function, and with the meter readings still being entered in the key 10 along with time and date information. However, in the limit, the metering function can be omitted altogether, eg by omitting the circuit 24. But even in this case, it may still be desired to store information generated in or by the consumer's part of the system in the key 10, eg information produced by a tamper detection device or circuit in the consumer's part of the system indicating that an attempt has been made to defraud the system.

## Claims

1. A prepayment commodity supply system comprising a prepayment token (10) having a memory (30), and supply control means (12) having a receptacle (14) for receiving the token and a circuit (16, 18) coupled to the receptacle (14) and responsive to credit and identification data in the token memory (30) to permit access to the commodity in dependence upon said credit data only if said identification data is recognised as valid by said circuit, said circuit (16, 18) being further arranged to write data representative of information stored in the supply control means into the token memory (30), characterised in that the token memory (30) comprises a first part containing said credit and identification data and a second part for receiving said stored information data, and the token (10) includes write inhibit means (MCS, 40) which co-operates with said circuit (16, 18) to prevent the first part of the token memory (30) from being written to by said circuit.

2. A system as claimed in claim 1, wherein the supply control means (12) includes a metering unit (24) for metering the commodity, and the stored information data includes at least one meter reading produced by the metering unit.

3. A system as claimed in claim 2, wherein the circuit (16, 18) is arranged to co-operate with the metering unit (24) to permit access to an amount of the commodity dependent upon said credit data.

4. A system as claimed in claim 1 or claim 2, wherein the supply control means (12) includes a timing unit (22), the circuit (16, 18) being arranged to co-operate with the timing unit to permit access to the commodity for a time period dependent upon said credit data.

5. A system as claimed in any preceding claim, wherein the token memory (30) comprises an EEPROM.

6. A system as claimed in any preceding claim, wherein the token (10) includes a first input (CS) for receiving a token enable signal, a second input (DI) for receiving serial data, a third input (SK) for receiving a data clock signal for clocking said serial data, and a fourth input (MCS) for receiving a control signal to control said write inhibit means.

7. A system as claimed in claim 6, wherein the token includes a respective digital debounce circuit (34, 42 to 48) associated with each of said inputs.

8. A system as claimed in any preceding claim, wherein the token (10) resembles a key.

## Patentansprüche

1. Vorauszahlungs-Verbrauchsgutversorgungssystem, mit einer Vorauszahlungsmarke (10), die einen Speicher (30) enthält, und einer Versorgungssteuereinrichtung (12), die eine Buchse (14) für die Aufnahme der Marke sowie eine Schaltung (16, 18) enthält, die mit der Buchse (14) verbunden ist und auf Guthaben- und Identifizierungsdaten im Markenspeicher (30) anspricht, um den Zugriff auf das Verbrauchsgut in Abhängigkeit von den Guthabendaten nur dann zuzulassen, wenn die Identifizierungsdaten von der Schaltung als gültig erkannt werden, wobei die Schaltung (16, 18) ferner so beschaffen ist, daß sie Daten, die in der Versorgungssteuer- einrichtung gespeicherte Information repräsentieren, in den Markenspeicher (30) schreibt, dadurch gekennzeichnet, daß der Markenspeicher (30) einen ersten Teil, der die Guthaben- und Identifizierungsdaten enthält, sowie einen zweiten Teil, der die gespeicherten Informationsdaten empfängt, enthält, und die Marke (10) eine Schreibsperreinrichtung (MCS, 40) enthält, die mit der Schaltung (16, 18) zusammenwirkt, um zu verhindern, daß von der Schaltung in den ersten Teil des Markenspeichers (30) geschrieben wird.

2. System nach Anspruch 1, in dem die Versorgungssteuereinrichtung (12) eine Meßeinheit (24) zum Messen des Verbrauchsguts enthält und die gespeicherten Informationsdaten wenigstens eine von der Meßeinheit erzeugte Meßangabe enthalten.

3. System nach Anspruch 2, in dem die Schaltung (16, 18) so beschaffen ist, daß sie mit der Meßeinheit (24) zusammenwirkt, um den Zugriff auf eine Verbrauchsgutmenge in Abhängigkeit von den Guthabendaten zuzulassen.

4. System nach Anspruch 1 oder Anspruch 2, in dem die Versorgungssteuereinrichtung (12) eine Zeiteinstellungseinheit (22) enthält, wobei die Schaltung (16, 18) so beschaffen ist, daß sie mit der Zeiteinstellungseinheit zusammenwirkt, um einen Zugriff auf das Verbrauchsgut für eine Zeitperiode in Abhängigkeit von den Guthabendaten zuzulassen.

5. System nach irgendeinem vorangehenden Anspruch, in dem der Markenspeicher (30) einen EEPROM enthält.

6. System nach irgendeinem vorangehenden Anspruch, in dem die Marke (10) einen ersten Eingang (CS) für den Empfang eines Marken-Freigabesignals, einen zweiten Eingang (DI) für den Empfang von seriellen Daten, einen dritten Eingang (SK) für den Empfang eines Datentaktsignals zum Takten der seriellen Daten sowie einen vierten Eingang (MCS) für den Empfang eines Steuersignals zum Steuern der Schreibsperreinrichtung enthält.

7. System nach Anspruch 6, in dem die Marke digitale Entprellschaltungen (34, 42 bis 48) enthält, wovon jede jeweils einem der Eingänge zugeordnet ist.

8. System nach irgendeinem vorangehenden Anspruch, in dem die Marke (10) einem Schlüssel ähnlich ist.

## Revendications

1. Système de fourniture de matière consommable à prépaiement comprenant un jeton (10) de prépaiement ayant une mémoire (30), et des moyens (12) de commande de fourniture ayant un réceptacle (14) destiné à recevoir le jeton, et un circuit (16, 18) relié au réceptacle (14) et sensible à des données de crédit et d'identification se trouvant dans la mémoire (30) du jeton, pour ne permettre un accès à la matière consommable, en fonction desdites données de crédit, que si lesdites données d'identification sont reconnues comme étant valides par ledit circuit, ledit circuit (16, 18) étant en outre conçu pour écrire des données représentatives d'informations stockées dans les moyens de commande de fourniture, dans la mémoire (30) du jeton, caractérisé en ce que la mémoire (30) du jeton comprend une première partie contenant lesdites données de crédit et d'identification et une seconde partie destinée à recevoir lesdites données d'informations stockées, et en ce que le jeton (10) comporte des moyens (MCS, 40) d'inhibition d'écriture qui coopèrent avec ledit circuit (16, 18) afin d'empêcher que ledit circuit écrive dans la première partie de la mémoire (30) du jeton.

2. Système selon la revendication 1, dans lequel les moyens (12) de commande de fourniture comportent une unité (24) de comptage destinée à compter la matière consommable, et dans lequel les données d'informations stockées comportent au moins une mesure de compteur produite par l'unité de comptage.

3. Système selon la revendication 2, dans lequel le circuit (16, 18) est conçu pour coopérer avec l'unité (24) de comptage afin de permettre un accès à une certaine quantité de matière consommable en fonction desdites données de crédit.

4. Système selon la revendication 1 ou la revendication 2, dans lequel les moyens (12) de commande de fourniture comportent une unité (22) de mesure de temps, le circuit (16, 18) étant conçu pour coopérer avec l'unité de mesure de temps afin de permettre un accès à la matière consommable pendant une période qui dépend desdites données de crédit.

5. Système selon l'une quelconque des revendications précédentes, dans lequel la mémoire (30) du jeton comprend une mémoire morte programmable effaçable électriquement (EEPROM).

6. Système selon l'une quelconque des revendications précédentes, dans lequel le jeton (10) comporte une première entrée (CS) destinée à recevoir un signal de validation de jeton, une seconde entrée (DI) destinée à recevoir des données série, une troisième entrée (SK) destinée à recevoir un signal d'horloge de données pour cadencer lesdites données série, et une quatrième entrée (MCS) destinée à recevoir un signal de commande pour commander lesdits moyens d'inhibition d'écriture.

7. Système selon la revendication 6, dans lequel le jeton comporte un circuit (34, 42 à 48) anti-rebond numérique respectif associé à chacune desdites entrées.

8. Système selon l'une quelconque des revendications précédentes, dans lequel le jeton (10) ressemble à une clé.
